# EUROPEAN PATENT APPLICATION

(11) **EP 0 585 011 A1**
(43) Date of publication of application: **02.03.1994**
(21) Application number: 93306395.0
(22) Date of filing: 13.08.1993
(51) Int. Cl.: B60R 11/02, H04M 1/04

(54) **Holding device for portable equipment**

(30) Priority: 22.08.1992 JP 64433/92 U
(71) Applicant: NEC CORPORATION, Tokyo (JP)
(72) Inventor: Nagai, Michio, c/o NEC Corporation, Minato-ku, Tokyo 108-01 (JP); Yoshida, Hiroshi, c/o NEC Saitama, Ltd., Kodama-gun, Saitama (JP)
(74) Representative: Abnett, Richard Charles

(57) **Abstract**

A holding device for holding portable equipment (22), such as a hand-held cordless telephone set, to enable a user to pick up the portable equipment (22) with one hand without dropping it. The holding device includes a main body (11), a holding member (12), a spring (13), a locking mechanism (14a) and a lock-releasing mechanism (14). The holding member (12) receives a part of the portable equipment (22), and is supported pivotally with respect to the main body (11) of the holding device. The spring mechanism (13) imparts a turning force in one direction to the holding member (12). The locking mechanism (14a) locks the portable equipment (22) to the main body (11) at a position to which the holding member (12) is pivoted against the turning force of the spring mechanism (13). The lock-releasing mechanism (14) releases the locking of the locking mechanism (14a) by operation of the user.

To hold the portable equipment (22) in the holding device, the portable equipment (22) and the holding member (12) are pivoted downwardly as a unit against the force of the spring mechanism (13), and the locking mechanism (14a) locks the portable equipment. The holding action is released by manually operating the lock-releasing mechanism (14), so that the locking action is released and the portable equipment (22) pivots upwardly from the main body (11) by the force of the spring mechanism (13).

## Description

The present invention relates to a holding device for portable equipment, for example a holding device such as a car adapter for holding a hand-held cordless telephone set.

Generally, a hand-held cordless telephone set can be used in a car which includes a car mount adapter. An example of such a car mount adapter is disclosed, for instance, in US Patent US-A-4 850 006.

The car mount adapter of this type firmly accommodates the hand-held cordless telephone set by locking means to prevent the hand-held cordless telephone set from falling out due to vibration of the car. When a user wants to use the hand-held cordless telephone set held in the car mount adapter, the user must release the locking means and pick up the hand-held cordless telephone from the car adapter. Thus the user is required to perform the two actions of releasing the lock and picking up the cordless telephone set.

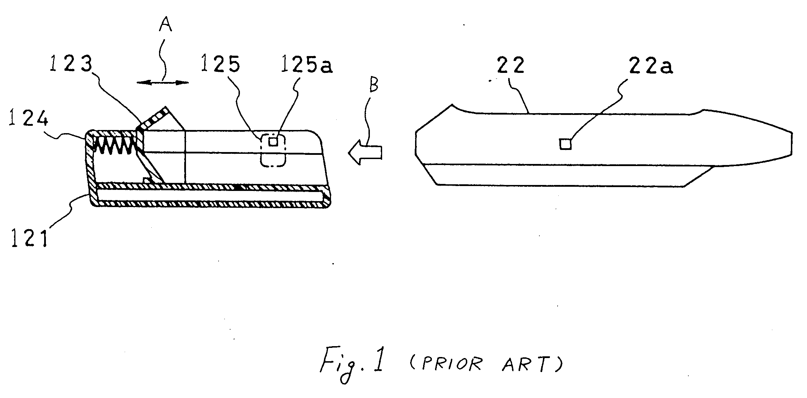

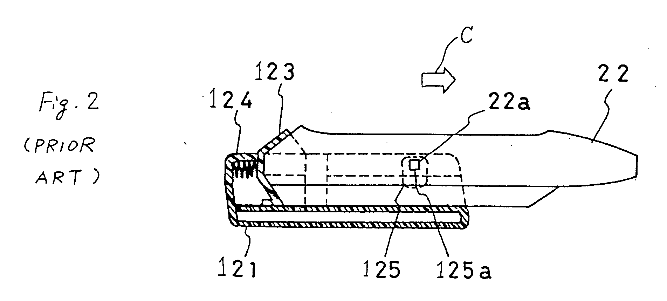

To better understand the present invention, a brief reference will be made to a prior art holding device, shown in Figs. 1 and 2.

Heretofore, a holding device as shown in Figs. 1 and 2 has been proposed as a device of this kind. A main body 121 of the prior art holding device is provided with a holding member 123 which is so constructed as to be able to accommodate a part of a hand-held cordless telephone set 22 as a portable equipment. Furthermore, the holding member 123 is so constructed as to be able to slide along the direction indicated by an arrow A shown in Fig. 1 by guide means (not shown) in the main body 121. A coil spring 124 is provided between the inner face of the main body 121 and the holding member 123 to give the holding member 123 a spring force. Also, release buttons 125 are provided on both sides of outer surfaces of the main body 121, respectively. Each of the release buttons 125 has a hook 125a at its inside surface. The hooks 125a are locked into recesses 22a provided on opposite side faces of the cordless telephone set 22, respectively.

In this holding device, the coil spring 124 is compressed by pushing in the cordless telephone set 22 toward the holding member 123 as indicated by an arrow B in Fig. 1, and the cordless telephone set 22 is held by the main body 121 with the hooks 125a locked into the recesses 22a as shown in Fig. 2. In this state, the cordless telephone set 22 is firmly accommodated in the holding device.

By pressing the release buttons 125, the locking between the hooks 125a and the recesses 22a is released, and the holding member 123 thrusts the cordless telephone set 22 forward (indicated by an arrow C in Fig. 2) by the return force of the coil spring 124.

In this prior art holding device, simultaneous with the release of the locking between the hooks 125a and the recesses 22a effected by the pressing of the release buttons 125, the holding member 123 pushes out the cordless telephone set 22 forwardly by the force of the coil spring 24. Therefore, the cordless telephone set 22 jumps out forwardly unless the cordless telephone set 22 is held by the other hand, and sometimes there is a fear that the cordless telephone set 22 may be dropped and damaged. Because of this, it is necessary to operate the release buttons 125 by one hand while holding the cordless telephone set 22 with the other hand, giving rise to the problem that the operation by one hand is impossible and the pick-up operation of the portable equipment is troublesome. This troublesomeness is especially a serious problem when a person wants to use the cordless telephone set 22 while driving the car.

We have appreciated that it would be greatly advantageous to provide a holding device which enables the user to release the lock and to pick up the portable equipment smoothly with a single hand.

The present invention is defined in claim 1 below, to which reference should now be made. Advantageous features of the invention are set forth in the appendant claims.

The invention will now be described in more detail by way of example with reference to the drawings, in which:
Fig. 1 is a sectional view of a prior art holding device and showing the state prior to the holding;
Fig. 2 is a sectional view of a prior art holding device and showing the held state;
Fig. 3 is a perspective view of an embodiment of the present invention;
Fig. 4 is a sectional view of the embodiment of the present invention and showing the state prior to the holding;
Fig. 5 is a sectional view of the embodiment of the present invention and showing the state in the midst of the holding;
Fig. 6 is a sectional view of the embodiment of the present invention and showing the held state;
Fig. 7 is a cross sectional view along the line VII-VII (Fig. 6) to show the locking of the portable equipment in detail in the held state;
Fig. 8 is a sectional view of the embodiment of the present invention to show the relation between the portable equipment and the hooks in detail in the state in the midst of the holding; and
Fig. 9 is a cross sectional view along the line IX-IX (Fig. 5) to show the state in the midst of the holding.

In the drawings, the same reference numerals denote the same structural elements.

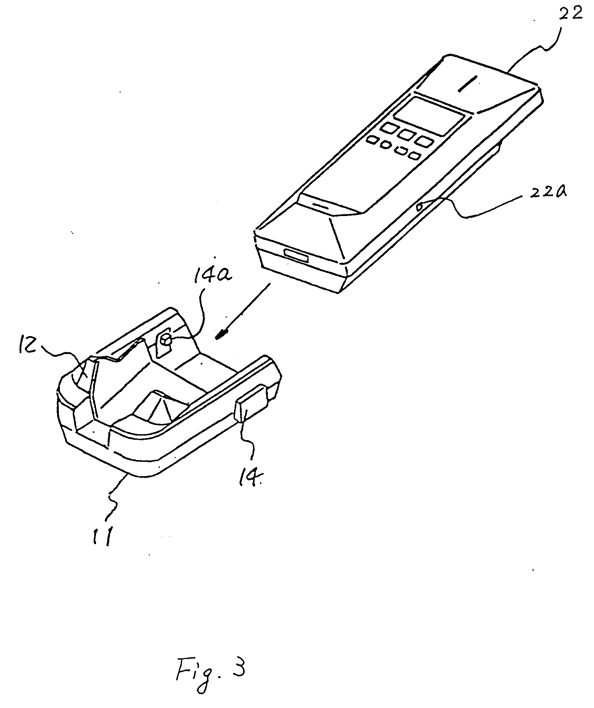

Referring to Fig. 3, a holding device embodying the present invention is shown and includes a main body 11 and a holding member 12 which may be formed of, for example, synthetic resin, but is not limited thereto. The main body 11 can be mounted in a car.

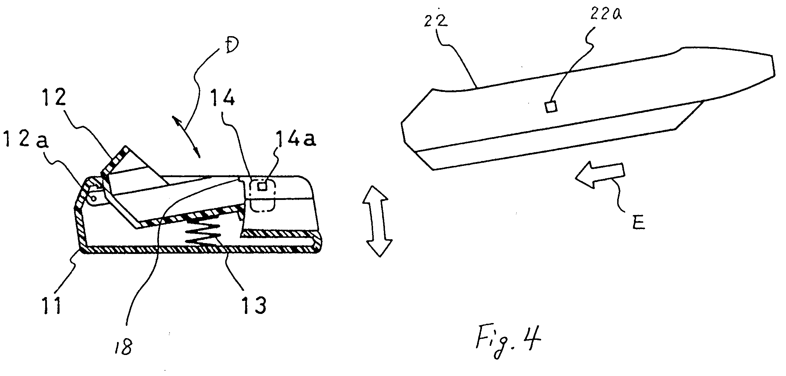

In the main body 11, a holding member 12, which can accommodate one of the end portions of a portable equipment such as the cordless telephone set 22, is supported pivotally up and down (as indicated by an arrow D) at a fulcrum 12a as shown in Fig. 4. The fulcrum 12a is provided on an inner surface of the main body 11 as a rotation axis of the holding member 12. A coil spring 13 is interposed between the main body 11 and the underside of the holding member 12. The holding member 12 is energized upwardly by means of the spring force of the coil spring 13. Fig. 4 shows the upper limit position of the rotation of the holding member 12 as restricted by a stopper 18.

In addition, release buttons 14 are arranged on both outer sides at forward positions of the main body 11, respectively. Also, each of the release buttons 14 has a hook 14a on the inside of the main body 11, respectively. These hooks 14a can hold the cordless telephone set 22 in a locked state by being engaged with the recesses 22a provided on both side faces of the cordless telephone set 22.

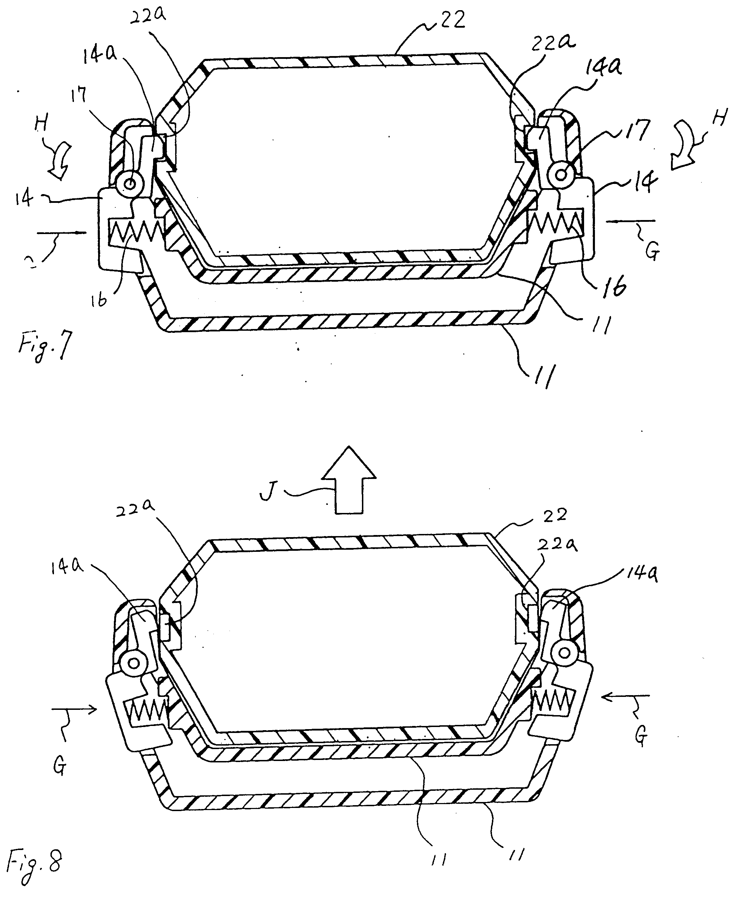

The structure of the release buttons 14 and the hooks 14a will now be described with reference to Fig. 7. Each of the release buttons 14 is supported at the main body 11 by a shaft 17, respectively, so as to rotate around the shaft 17. A coil spring 16 is provided between the main body 11 and the release button 14 to bias the release button 14 toward the outside of the main body 11.

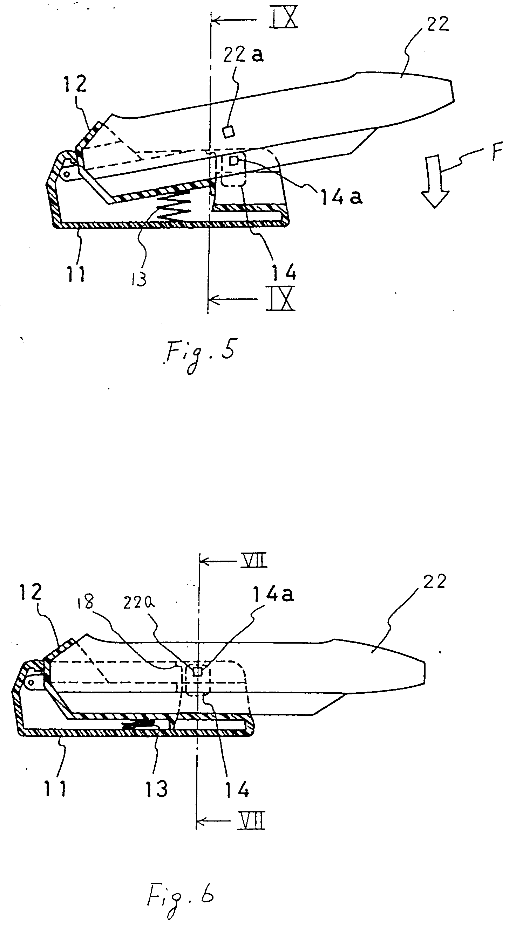

The operation of the embodiment will be described with reference to Figs. 4 to 9. In this configuration, the cordless telephone set 22 is put on the holding member 12 as shown in Fig. 5 by pushing one end portion of the cordless telephone set 22 against the holding member 12 as shown by an arrow E (see Fig. 4). After this, by turning or pivoting (as indicated by an arrow F in Fig. 5) the cordless telephone set 22 and the holding member 12 downwardly as a unit against the force of the coil spring 13 with the fulcrum 12a as the axis, the hooks 14a are clicked and locked into the recesses 22a by the spring force of the respective coil springs 16, and the cordless telephone set 22 is brought into a held state as shown in Figs. 6 and 7. In this state, the cordless telephone 22 is firmly accommodated in the holding device.

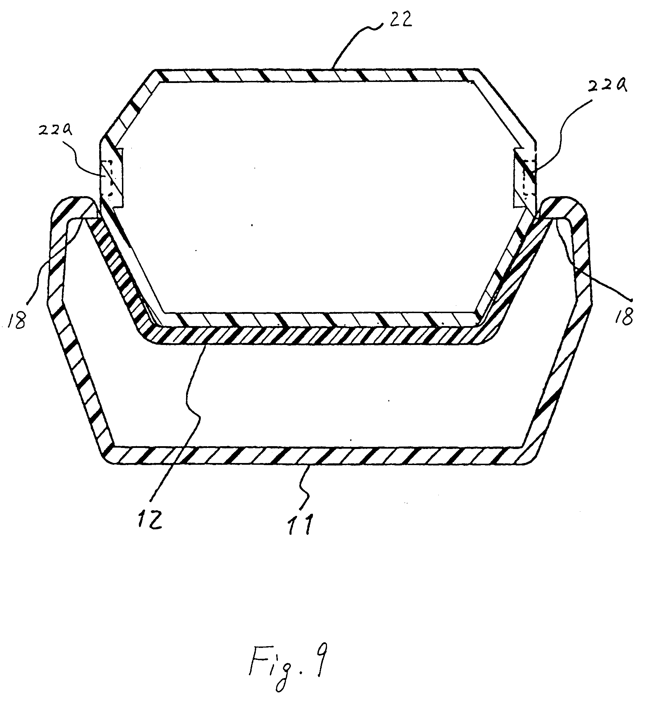

On the other hand, in order to release the holding, the locking action between the hooks 14a and the recesses 22a is released by operating the release buttons 14. Namely, when the release buttons 14 are pressed against the force of the respective springs 16 as indicated by arrows G shown in Fig. 7 by, for example, a thumb and a middle finger of the user's one hand, respectively, each of the release buttons 14 rotates around the corresponding shaft 17 as indicated by arrows H. As a result, each of the hooks 14a is separated from each of the recesses 22a of the cordless telephone set 22, respectively, so that engagement between the hooks 14a and the recesses 22a is released as shown in Fig. 8. Then, the cordless telephone set 22 is pivoted or turned upwardly (the direction indicated by an arrow J in Fig. 8), together with the holding member 12 by means of the force of the compressed spring 13, and returns to the state as shown in Figs. 5 and 9. The user need only lift up the cordless telephone set 22 from the holding member 12 in this state by the same hand which presses the release buttons 14.

Accordingly, when the release buttons 14 are pressed, only the other end part of the cordless telephone set 22 is turned or pivoted upwardly together with the holding member 12, and the cordless telephone set 22 will not pop out of the main body 11, as was the case in the prior art. Therefore, the release button operation and the portable equipment pick-up operation can be executed sequentially, making feasible the execution of these operations with on hand. Moreover, when the user presses the release button by a thumb and a middle finger of one hand, since the cordless telephone set 22 pivots upwardly into the palm of the user's hand, the pick-up operation can be executed very smoothly.

In the example shown the inward release direction of the release buttons 14 on the opposed sides of the holder 12 is generally parallel to the pivot axis of the holding member 12 as defined by the fulcrum 12a. The cordless telephone, when released then naturally moves into the user's hand. For neatness and symmetry, the line joining the release buttons 14 is substantially parallel to the pivot axis.

Furthermore, the holding member 12 accommodates the cordless telephone 22 so as to embrace one of its end parts, so that even when the holding member 12 is pivoted or turned upwardly as shown in Fig. 5, the cordless telephone set 22 will not fall off the holding member 12.

## Claims

1. A holding device for holding a portable equipment, said holding device comprising:
a main body (11);
a holding member (12) for receiving a part of the portable equipment (22), said holding member being supported pivotally with respect to said main body;
first elastic means (13) for imparting a turning force in one direction to said holding member;
locking means (14a) for locking the portable equipment to said main body at a position to which said holding member is pivoted against the turning force of said first elastic means; and
releasing means (14) for manually releasing the locking of said locking means.

2. A holding device as claimed in claim 1, wherein said first elastic means comprises a coil spring (13) positioned between said main body (11) and said holding member (12).

3. A holding device as claimed in claim 1 or 2, wherein the portable equipment comprises a hand-held cordless telephone set (22).

4. A holding device as claimed in claim 3, wherein said holding device is a car mount adapter.

5. A holding device as claimed in any preceding claim, wherein the portable equipment has recesses (22a) provided on opposite side faces, and wherein said locking means comprises hooks (14a) projecting from an inside surface of said main body, and second elastic means (16) for imparting a force to said hooks so as to engage said recesses of the portable equipment.

6. A holding device as claimed in claim 5, wherein said release means comprises release buttons (14) projecting from the outside surface of said main body for releasing the engagement between said hooks (14a) of said locking means and said recesses (22a) of the portable equipment.

7. A holding device according to claim 6, in which the release direction of the release buttons (14) on the opposed sides of the holding device is generally parallel to the pivot axis of the holding member.
